# EUROPÄISCHE PATENTSCHRIFT

(11) **EP 3 389 912 B1**
(45) Veröffentlichungstag und Bekanntmachung des Hinweises auf die Patenterteilung: **01.05.2024**
(21) Anmeldenummer: 16805847.7
(22) Anmeldetag: 05.12.2016
(51) Int. Cl.: B23K 20/12, B29C 65/06, B23K 20/10

(54) **LINEARREIBSCHWEISSMASCHINE**
LINEAR FRICTION WELDING MACHINE
MACHINE DE SOUDAGE PAR FRICTION LINÉAIRE

(30) Priorität: 18.12.2015 DE 102015122314
(43) Veröffentlichungstag der Anmeldung: 24.10.2018
(73) Patentinhaber: Pewag Austria GmbH, 8605 Kapfenberg (AT)
(72) Erfinder: FUCHS, Franz, 8605 Kapfenberg (AT)
(74) Vertreter: Patentanwälte Geyer, Fehners & Partner mbB
(86) Internationale Anmeldenummer: PCT/EP2016/079788
(87) Internationale Veröffentlichungsnummer: WO 2017/102407

(56) Entgegenhaltungen:
- WO-A1-2013/085962
- DE-U1-202004 009 909
- JP-A- 2002 153 975

## Beschreibung

Die Erfindung bezieht sich auf eine Linearreibschweißmaschine, die das Verschweißen zweier Werkstücke miteinander durch das Schweißverfahren des Linearreibschweißens gestattet.

Reibschweißverfahren, die erst im Verlauf der vergangenen ca. 50 Jahre entwickelt wurden, gehen von dem Prinzip aus, daß zwei aneinander gedrückte, zu verschweißende Flächen, die zueinander eine Relativbewegung ausführen, infolge der dabei auftretenden Reibung zunehmend erhitzt werden, wobei bei Erreichen einer ausreichenden Erwärmung dieser Flächen durch ein anschließendes Stauchen bzw. Verpressen der Flächen gegeneinander der zum Erzielen einer Verschweißung nötige örtliche Druckaufbau erzeugt wird.

Bei dem dabei üblicherweise eingesetzten Reibschweißverfahren handelt es sich um das sogenannte Rotationsreibschweißen, bei dem die aneinander liegenden Reibflächen der Werkstücke relativ zueinander eine koaxiale Drehbewegung ausführen, durch welche die gewünschte Erhitzung der Reibflächen stattfindet. Dabei tritt allerdings an den Reibflächen infolge der unterschiedlichen Winkelgeschwindigkeiten über den Querschnitt der jeweiligen Reibfläche hinweg eine ungleiche Erwärmung innerhalb der jeweiligen Reibfläche auf mit der Folge einer ebenfalls ungleichen Festigkeitsverteilung in den Schweißstellen, wobei auch nur rotationssymmetrische Querschnitte miteinander verschweißt werden können.

Während die Rotationsreibschweißung seit einigen Jahrzehnten zunehmend in vielen industriellen Bereichen eingesetzt wurde (DE 29 09 267 B2, DE 34 33 519 C1, DE 20 2004 009 909 U1, DD 273 357 A3, DE 1 947 470 A, WO 2006/000330 A1), hat das Linearreibschweißen, bei dem die miteinander zu verbindenden Schweißflächen relativ zueinander eine Linearbewegung ausführen und auch im Querschnitt rechteckige Teile miteinander verschweißt werden können, in der industriellen Fertigung nur langsam Eingang gefunden.

So ist aus der EP 1 459 833 A1 ein Verfahren und eine Vorrichtung zum Linearreibschweißen der Stirnseiten von Langteilen, insbesondere Schienen, bekannt, wobei hier zur Reibungserzeugung mindestens eines der beiden Teilenden oszillierend bewegt wird. Dies wird dadurch erreicht, daß die Spannmittel, in denen jeweils eines der beiden zu verbindenden Teile eingespannt ist, nach deren Anlegen gegeneinander über eine gemeinsame Antriebswelle und eine einstellbare exzentrische Aufhängung jedes Spannmittels in eine oszillierende Exzenterbewegung versetzt und damit die Erhitzung in der zu verbindenden Endfläche der Teile erzeugt wird. Zur Durchführung des Schweißvorgangs ist dabei allerdings bei Erreichen der entsprechenden Reibtemperatur eine achsfluchtende Ruhestellung der Spannmittel erforderlich, um die gewünschte querschnittkonforme Verschweißung der beiden Enden der zu verschweißenden Teile zu erreichen. Zur Verschweißung erfolgt dann letztlich noch eine Druckbeaufschlagung der beiden miteinander zu verbindenden Flächen, der sogenannte "Stauchschlag", wobei in der Schilderung dieser Druckschrift jedoch offen bleibt, auf welche Weise dieser Stauchschlag durchgeführt werden soll.

Diese bekannte Reibschweißmaschine mag zwar zum Reibschweißen der Endflächen zweier Teile mit großer Längserstreckung, z. B. von Schienen o. ä., mit profilierten Querschnitten einsetzbar sein, ist infolge der in der Reibfläche ausgelösten translatorischen Relativbewegung der Endflächen der zu verbindenden Teile zueinander durch einen entsprechenden Exzenterantrieb der die Teile-Enden spannenden Spannmittel über eine entsprechende motorgetriebene Drehachse aufwendig und nicht zum Einsatz für ein Linearreibschweißen relativ kleiner Querschnittsflächen, wie z. B. beim Verschweißen von Teilen von Kettengliedern miteinander, sinnvoll einsetzbar. Auch läßt der hier eingesetzte Exzenterantrieb die Erzeugung einer hohen Schwingfrequenz nicht zu, was die Fertigungsgeschwindigkeit begrenzt.

Die WO 2013/085962 A1 offenbart eine Vorrichtung zum linearen Reibschweißen, die in verschiedenen Ausführungsformen eine oder mehrere Schwingungsbaugruppen umfasst, die während des Schweißvorgangs beide Werkstücke gleichzeitig entlang der Schweißachse in Schwingungen versetzen. In einer Ausführungsform werden separate Schwingungsbaugruppen verwendet, um die Werkstücke entlang der Schweißachse relativ zueinander in Schwingung zu versetzen. Jede Schwingungsbaugruppe verfügt über einen eigenen Oszillatormechanismus mit Motoren und Nocken, die in und außer Phase mit dem anderen Schwingungsmechanismus bewegt werden können, um die Relativbewegung zwischen den Werkstücken zu erzeugen. In einer anderen Ausführungsform umfasst das Gerät eine Schwingungsbaugruppe, die einen einzigen Oszillator und zwei Sätze von Kipphebeln verwendet, die Schlitten tragen, die durch einen Verbindungsmechanismus operativ verbunden sind, um beide Werkstücke gleichzeitig entlang der Schweißachse in Schwingung zu versetzen.

Ausgehend hiervon stellt nun die Erfindung darauf ab, eine Linearreibschweißmaschine zur Verfügung zu stellen, die für das Verschweißen insbesondere auch von Teilen mit relativ kleinen Querschnittsflächen geeignet ist, einen unkomplizierten und relativ einfachen Aufbau aufweist und dabei auch eine hohe Fertigungsgeschwindigkeit gestattet.

Die erfindungsgemäße Linearreibschweißmaschine umfaßt eine Staucheinheit und eine Oszillatoreinheit, deren jede eine Spannaufnahme für ein Werkstück aufweist und beide Spannaufnahmen so vorgesehen sind, daß dort eingespannte Werkstücke mit ihren zu verschweißenden Flächen einander zugewandt und zueinander ausgerichtet gehaltert sind, wobei die Spannaufnahme der Staucheinheit relativ zu der der Oszillatoreinheit linear verfahrbar und die letztere senkrecht quer zur Verfahrrichtung der Staucheinheit in einer Oszillationsrichtung oszillierend hin- und herbewegbar sowie an den einen Enden von vertikalen sowie horizontalen Stützen starr befestigt ist, deren andere Enden starr an Stützkörpern verankert sind. Erfindungsgemäß sind dabei die Stützen so ausgelegt, daß sie in Oszillationsrichtung elastisch federnd verbiegbar sind und,daß die Stutzen bei einer Belastung ir Verfahrrichtung der Spannaufnahme der Staucheinheit knickfest ausgebildet sind, wobei ihre Knicksicherheit, entsprechend dem Verhältnis von Knickkraft zur einwirkenden Kraft, mindestens im Bereich von 5 bis 10 liegt.

Die erfindungsgemäße Linearreibschweißmaschine umfaßt zunächst als wesentliche konstruktive Einrichtungen eine Staucheinheit sowie eine Oszillatoreinheit, wobei jeder dieser beiden Einheiten eine Spannaufnahme zum Einlegen und Spannen eines Werkstücks zugeordnet ist. Dabei sind die beiden Spannaufnahmen so ausgebildet und angebracht, daß dort eingespannte Werkstücke jeweils mit ihren zu verschweißenden Flächen einander zugewandt und zueinander ausgerichtet, d. h. achsfluchtend zueinander, gehaltert sind. Dabei kann die Spannaufnahme der Staucheinheit relativ zu der Spannaufnahme der Oszillatoreinheit linear verfahren werden, wobei das in der Spannaufnahme der Staucheinheit gehalterte Werkstück mit seiner zu verschweißenden Endfläche relativ zu der Endfläche des Werkstücks, das in der Spannaufnahme der Oszillatoreinheit gehaltert ist, unter Aufrechterhaltung der achsparallelen Ausrichtung beider Endflächen zueinander bewegt wird.

Die Oszillatoreinheit ist bei der Erfindung so ausgebildet, daß sie mit der an ihr angebrachten Spannaufnahme senkrecht und quer zur linearen Verfahrrichtung der Staucheinheit oszillierend hin- und herbewegt werden kann. Dabei ist ihre Spannaufnahme an den Enden von in Oszillationsrichtung elastisch federnd verbiegbaren vertikalen sowie horizontalen Stützen starr befestigt, deren andere Enden ebenfalls starr an Stützkörpern verankert und so ausgelegt sind, daß sie bei Auslenkung in Oszillationsrichtung ein biegeweiches Verhalten zeigen, bei Belastung der mit ihnen verbundenen Spannaufnahme in Verfahrrichtung der Staucheinheit jedoch knickfest sind. Das bedeutet, daß diese Stützen in Schwingrichtung, also in Oszillationsrichtung, wenig Biegewiderstand bieten, während senkrecht hierzu, nämlich in der Verfahrrichtung der Spannaufnahme der Staucheinheit, ihr Biegeverhalten hart und mit großem Biegewiderstand ausgelegt ist. Eine "knickfeste" Ausbildung der Stützen ist erfindungsgemäß dann erfüllt, wenn ihre Knicksicherheit (entsprechend dem Verhältnis von Knickkraft zur einwirkenden Kraft) mindestens im Bereich von 5 bis 10 liegt.

Dabei können die vertikalen und die horizontalen Stützen in jeder für ein solches Biegeverhalten geeigneten Form ausgebildet sein, besonders bevorzugt werden die vertikalen Stützen jedoch in Form leistenförmiger Träger und die horizontalen Stützen in Form von Stützstäben vorgesehen.

Bei leistenförmigen Trägern, also bei einer Form, bei der die Breite der Leiste deutlich größer als deren Dicke ist, ist grundsätzlich der Biegewiderstand in Richtung der dünnen Leistenbreite gering, in Richtung senkrecht hierzu weisen die vertikalen Stützen jedoch ein starres und knickfestes Verhalten auf.

Bei den Stützen, die eine Abstützung der Spannaufnahme der Oszillatoreinheit in horizontaler Richtung bewirken, wird das gewünschte Biegeverhalten bevorzugt bei Ausbildung dieser Stützen in Form von Stützstäben erreicht: Bei solchen horizontalen Stäben wirkt die Abstützung der entsprechenden Stütze in horizontaler Richtung, also in Längsrichtung des Stützstabes (entsprechend der linearen Verfahrrichtung der Staucheinrichtung), wobei sich in dieser Richtung ein sehr starker Stützeffekt ergibt, da ein Stützstab in seiner Längsrichtung in der Regel ein sehr biegesteifes, knickfestes Verhalten zeigt. Andererseits sind solche Stützstäbe aber senkrecht zu ihrer Längserstreckung, also bei der erfindungsgemäßen Linearreibschweißmaschine in Oszillationsrichtung der Oszillatoreinheit gesehen, relativ biegeweich und elastisch in ihrem Biegeverhalten, wobei die Größe des Biegewiderstandes in dieser Richtung hauptsächlich durch das Material des Stützstabes bestimmt wird.

Die Stützen können aus jedem für ein funktionsgemäßes Verhalten geeigneten Werkstoff bestehen, werden aber ganz besonders bevorzugt aus einem geeigneten Stahl gefertigt, etwa einem hochfesten Vergütungsstahl, z. B. 42 GrMo 4, was es gestattet, die eingesetzten Querschnitte besonders klein auszuführen.

Bei der erfindungsgemäßen Linearreibschweißmaschine werden vorzugsweise horizontale Stützen eingesetzt, die stabförmig ausgebildet sind. Die Dimensionierung dieser Stäbe hängt von der Größe der Linearreibschweißmaschine und der zu verschweißenden Teile sowie dem eingesetzten Werkstoff der Stäbe ab. Bei einer von der Anmelderin benutzten Versuchsmaschine zum Verschweißen von Kettengliedern hatten die Stäbe eine Länge von 40 cm, während die eingesetzten vertikalen Abstützungen in einer Länge von 35 cm ausgeführt waren. Sie sind von ihrer Form und ihrem Material her so gewählt, daß die Amplitude der oszillierenden translatorischen Bewegung der Oszillationseinrichtung zwar abhängig vom zu schweißenden Werkstück ist, in jedem Fall aber nicht mehr als 2,5 mm bei einer Frequenz von nicht mehr als 100 Hz beträgt.

Die Anzahl der bei der erfindungsgemäßen Linearreibschweißmaschine eingesetzten horizontalen und vertikalen Stützen wird entsprechend dem vorgesehenen Einsatzbereich dieser Maschine gewählt, wobei es jedoch grundsätzlich vorteilhaft ist, wenn jeweils mindestens zwei zueinander parallele vertikale und mindestens zwei zueinander parallele horizontale Stützen vorgesehen sind.

Bevorzugt werden vertikale Stützen so angeordnet, daß durch sie die Spannaufnahme der Oszillatoreinheit vertikal sowohl nach unten, wie auch nach oben hin abgestützt wird. Besonders bevorzugt ist bei der Erfindung auch jede Spannaufnahme so ausgebildet, daß sie ein unteres Aufnahmeteil und ein oberes Abdeckteil umfaßt, zwischen denen ein aufgenommenes Werkstück kraftschlüssig und/oder formschlüssig verklemmbar ist, wobei besonders bevorzugt zum Einlegen oder Entnehmen des Werkstücks das obere Abdeckteil jeder Spannaufnahme vertikal nach oben hin verfahrbar oder abnehmbar ist.

Eine besonders bevorzugte Ausgestaltung der Erfindung besteht auch darin, daß sowohl das untere Aufnahmeteil, wie auch das obere Abdeckteil der Spannaufnahme der Oszillatoreinheit jeweils an vertikale Stützen und das untere Aufnahmeteil auch noch an die horizontalen Stützen angeschlossen ist, wobei letztere die Spannaufnahme auf deren der Staucheinheit abgewandten Seite abstützen.

Weiter bevorzugt ist es, wenn die Spannaufnahme der Staucheinheit an einem Haltearm angebracht ist, der relativ zur Spannaufnahme der Oszillatoreinheit linear verfahren werden kann.

Zur Ausführung der Translationsbewegung der Spannaufnahme der Oszillatoreinheit ist diese bevorzugt an einen hydraulischen Pulsator zu ihrem Hin- und Herbewegen angeschlossen, wobei bei Ausbildung der Spannaufnahme in ein unteres Aufnahmeteil und ein oberes Abdeckteil vorteilhafter Weise das untere Aufnahmeteil mit diesem Pulsator verbunden ist. Dabei wird bei Übertragung der Oszillationsbewegung von dem Pulsator auf das untere Aufnahmeteil der Spannaufnahme das obere Abdeckteil, das von oben her das in der Spannaufnahme enthaltene Werkstück einklemmt, unter Aufrechterhaltung seiner Klemmstellung vom unteren Aufnahmeteil bei der Oszillation mitbewegt.

Weiter bevorzugt wird der hydraulische Pulsator über eine in Oszillationsrichtung ausgerichtete Verbindungsstange mit dem unteren Aufnahmeteil der Spannaufnahme der Oszillatoreinheit, bevorzugt auch unter Zwischenschaltung einer Kupplung, verbunden und ist seinerseits an einem Maschinengestell der erfindungsgemäßen Linearreibschweißmaschine befestigt.

Als hydraulischer Pulsator wird bevorzugt ein solcher eingesetzt, der bei Betrieb mit einer einstellbaren Amplitude von maximal 2,5 mm und mit einer einstellbaren Frequenz von maximal 100 Hz betreibbar ist, wodurch ein großer Einsatzbereich der erfindungsgemäßen Linearreibschweißmaschine abgedeckt werden kann.

Bevorzugt ist ferner, wenn das obere Abdeckteil jeder Spannaufnahme zum vertikalen Abheben derselben über eine Betätigungsstange an einen am Maschinengestell der Linearreibschweißmaschine angebrachten hydraulischen Betätigungszylinder angeschlossen ist, wobei besonders bevorzugt die vertikalen Stützen des oberen Abdeckteiles der Spannaufnahme der Oszillatoreinheit an einer gemeinsamen Halterung starr verankert sind, die ihrerseits an der Betätigungsstange zum vertikalen Abheben des oberen Abdeckteiles der Spannaufnahme befestigt ist. Durch Hochfahren der Halterung können gleichzeitig alle vertikalen Stützen des oberen Abdeckteiles der Spannaufnahme an der Oszillatoreinheit angehoben werden, so daß ein rasches Einlegen oder Herausnehmen eines Werkstücks aus dem unteren Aufnahmeteil der Spannaufnahme möglich ist.

Bevorzugt werden bei der Erfindung die Stützkörper der vertikalen und horizontalen Stützen des unteren Aufnahmeteils der Spannaufnahme der Oszillatoreinheit vom Maschinengestell gebildet oder sie stützen sich direkt an diesem ab. In jedem Fall stellen sie sicher, daß an ihnen die vertikalen und horizontalen Stützen der Oszillatoreinheit stets starr gehaltert sind.

Es ist ferner bevorzugt, wenn bei der Erfindung die Staucheinheit zu ihrem linearen Verfahren an einen hydraulischen Betätigungszylinder angeschlossen ist, über den ein in der Spannaufnahme der Staucheinheit gehaltertes Werkstück unter einem einstellbaren Anpreßdruck gegen ein in der Spannaufnahme der Oszillatoreinheit gehaltertes Werkstück andrückbar ist, wobei bevorzugt ein Anpreßdruck im Bereich von 10N/mm² bis 250 N/mm², besonders bevorzugt im Bereich von 30 N/mm² bis 50 N/mm², eingestellt wird.

In vorteilhafter Ausgestaltung wird bei der erfindungsgemäßen Linearreibschweißmaschine eine zentrale Steuerungseinrichtung vorgesehen, die zum Steuern aller während des Betriebs der Maschine durchzuführenden Betätigungen der einzelnen Maschinenelemente dient und insbesondere das Ein- und Ausschalten des Pulsators, das lineare Verfahren der Staucheinheit, das Andrücken des in deren Spannaufnahme gehalterten Werkstücks gegen das in der Spannaufnahme der Oszillatoreinrichtung gehalterte Werkstück, die Ausführung des abschließenden Stauchvorgangs sowie das Öffnen und Schließen der Abdeckteile zum Einlegen bzw. Herausnehmen der zu verschweißenden oder verschweißten Werkstücke steuert.

Die erfindungsgemäße Linearreibschweißmaschine weist ganz grundsätzlich den großen Vorteil auf, daß sie im Hinblick auf ihre oszillierenden Teile keinerlei mechanische Gelenke, etwa Kugellager oder Gleitlager, einsetzt, von denen bekannt ist, daß sie bei hoher Schwingfrequenz und Last nur eine relativ geringe Lebensdauer aufweisen. Vielmehr kommt die Oszillatoreinheit der erfindungsgemäßen Linearreibschweißmaschine ohne derartige Lager aus und arbeitet mit verschleißfreien, dauerfesten, biegeelastischen mechanischen Elementen, welche die auftretenden oszillierenden Bewegungen führen und gleichzeitig auch die in den Reibflächen eingesetzten Drücke wie auch die beim Stauchschlag frei werdenden Kräfte abstützen. Dies führt somit zu einem Aufbau, der besonders wirtschaftlich und effizient sowie gleichzeitig auch vergleichsweise einfach montierbar ist und auch hohe Schwingfrequenzen ohne weiteres zuläßt.

Auf der erfindungsgemäßen Linearreibschweißmaschine können neben Werkstücken, die aus einem oder mehreren Querschnitten bestehen, etwa Kettengliedern, auch rahmenartige Werkstücke, z. B. Fensterrahmen, und schließlich auch Werkstücke mit komplizierter Geometrie verschweißt werden, wobei hierfür jeweils nur eine entsprechende Anpassung der Maschine mit ihren Spannaufnahmen an die zu verschweißenden Werkstücke vorgenommen werden muß.

Nachfolgend wird die Erfindung beispielshalber anhand der beigefügten Zeichnungen noch näher erläutert. Es zeigen:
- Fig. 1: eine prinzipielle Seitenansicht einer erfindungsgemäßen Linearreibschweißmaschine;
- Fig. 2: eine Perspektivansicht der Linearreibschweißmaschine aus Fig. 1, in Blickrichtung auf deren Vorderseite (rechte Maschinenseite in Fig. 1);
- Fig. 3: eine Vorderansicht der Linearreibschweißmaschine gemäß Fig. 1 (gesehen in Blickrichtung A in Fig. 1), und
- Fig. 4: eine perspektivische Ansicht der Linearreibschweißmaschine aus Fig. 1, in einer um etwa 90° gegenüber der Darstellung aus Fig. 2 entgegen dem Uhrzeigersinn verdrehten Position.

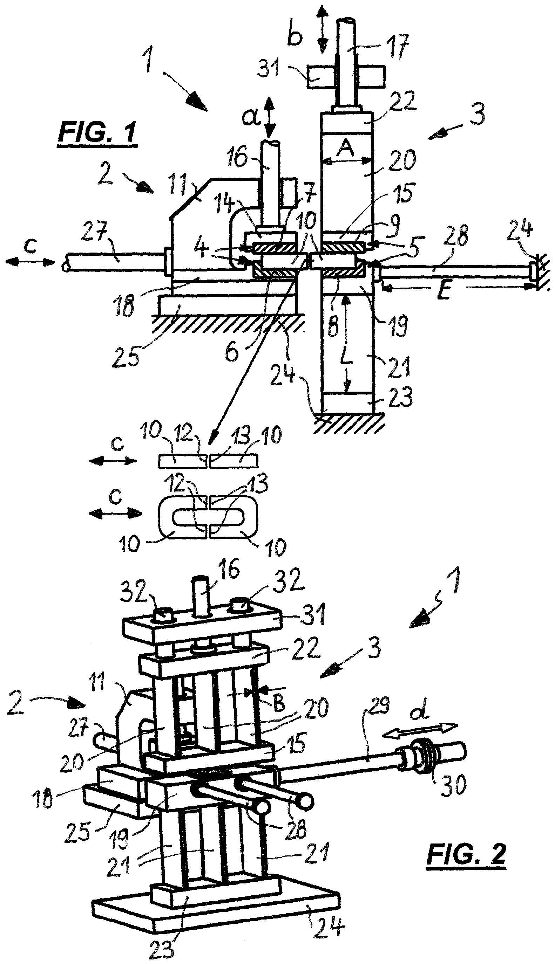

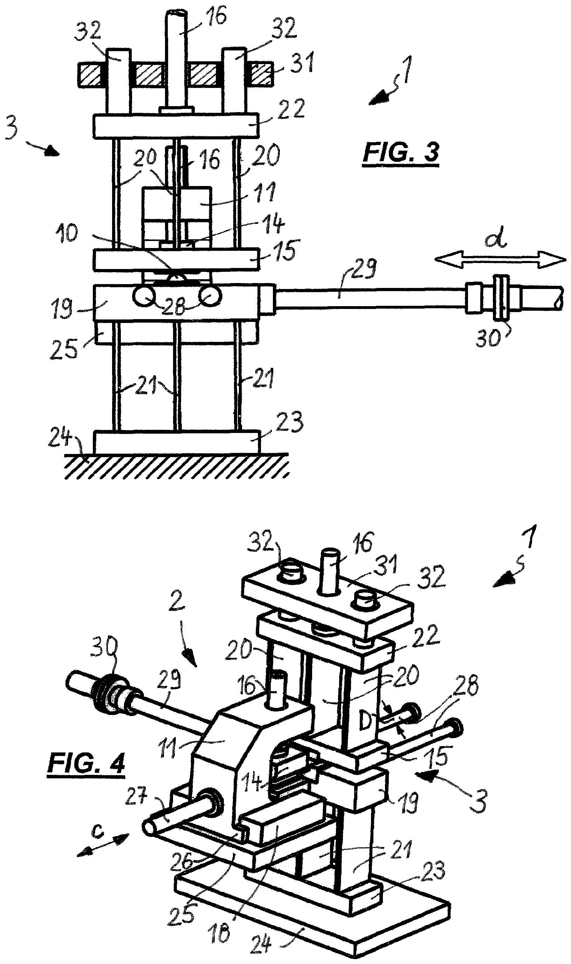

In den Figuren ist eine Ausführungsform einer erfindungsgemäßen Linearreibschweißmaschine dargestellt, und zwar in einer Seitenansicht (Fig. 1), einer Vorderansicht (Fig. 3) sowie in zwei perspektivischen Darstellungen, welche die Linearreibschweißmaschine in zwei um 90° entgegen dem Uhrzeigersinn verschwenkten Positionen zeigen.

In den Figuren sind ferner gleiche Teile mit gleichen Bezugszeichen versehen.

Zunächst sei auf die Darstellung der Fig. 1 eingegangen, in welcher eine Linearreibschweißmaschine 1 in Seitenansicht gezeigt ist, die eine Staucheinheit 2 sowie eine Oszillatoreinheit 3 umfaßt.

Dabei ist die Staucheinheit 2 mit einer Spannaufnahme 4 und die Oszillatoreinheit 3 mit einer Spannaufnahme 5 versehen.

Die Spannaufnahme 4 umfaßt ein unteres Aufnahmeteil 6 und die Spannaufnahme 5 ein unteres Aufnahmeteil 8, in welches jeweils ein zu verschweißendes Werkstück 10 eingelegt wird, wobei jedes der eingelegten Werkstücke 10 an seiner dem Werkstück 10 in der jeweils anderen Spannaufnahme 4 bzw. 5 zugewandten Seite etwas über die Spannaufnahme 4 bzw. 5, in der es aufgenommen ist, übersteht.

Neben dem jeweils unteren Aufnahmeteil 6 bzw. 8 umfaßt die Spannaufnahme 4 der Staucheinheit 2 noch ein oberes Abdeckteil 7 und die Spannaufnahme 5 der Oszillatoreinheit 3 ein oberes Abdeckteil 9, wobei jedes obere Abdeckteil 7 und 9 bei in die Spannaufnahmen 4 und 5 eingesetzten Werkstücken 10 das jeweils zugeordnete Werkstück 10 von dessen Oberseite her gegen das zugehörige untere Aufnahmeteil 6 bzw. 8 verklemmt und auf diese Weise fest haltert.

Jedes der oberen Abdeckteile 7 und 9 ist seinerseits in einer zugeordneten Halterung 14 bzw. 15 angebracht, die ihrerseits über eine vertikal nach oben laufende Betätigungsstange 16 bzw. 17 zum Öffnen der Spannaufnahmen 4 bzw. 5 nach oben bewegt werden kann, so daß entweder Werkzeuge 10 in die betreffende Spannaufnahme 4 bzw. 5 eingelegt oder bereits verschweißte Werkstücke 10 aus den Spannaufnahmen 4 und 5 herausgenommen werden können.

Jede Betätigungsstange 16 sowie 17 ist dabei an eine entsprechende Antriebseinrichtung (in den Figuren nicht dargestellt) angeschlossen, die vorzugsweise jeweils in Form eines Hydraulikzylinders ausgebildet ist und an einem (in den Figuren nur prinzipiell dargestellten) Maschinengestell 24 der gezeigten Linearreibschweißmaschine 1 befestigt ist.

Während die obere Halterung 14 der Spannaufnahme 4 der Staucheinheit 2 direkt an das untere Ende ihrer Betätigungsstange 16 angekoppelt ist, wie dies z. B. aus Fig. 1 ersichtlich ist, ist die obere Halterung 15 der Spannaufnahme 5 der Oszillatoreinheit 3 nicht direkt an das untere Ende ihrer Betätigungsstange 17 angeschlossen. Vielmehr sind hier drei vertikal verlaufende, zueinander parallele leistenförmige Stützen 20 zwischengeschaltet (vgl. Fig. 2 und 3), die an ihren jeweils unteren Enden starr an der Halterung 15 und an ihren jeweils oberen Enden starr an einer quer verlaufenden Halterung 22 befestigt sind, die an ihrer Oberseite mittig an das untere Ende der Betätigungsstange 17 angekoppelt ist.

Ebenso wie die obere Halterung 15, in welcher das Abdeckteil 9 der Spannaufnahme 5 der Oszillatoreinheit 3 sitzt, an den unteren Enden der vertikalen Stützen 20 starr befestigt ist, ist auch die untere Halterung 19 des Aufnahmeteils 8 der Oszillatoreinheit 3 ihrerseits über ebenfalls drei parallele leistenförmige vertikale Stützen 21 nach unten hin abgestützt (vgl. Fig. 2 und 3). Diese Stützen 21 sind an ihren oberen Enden an der Unterseite der Halterung 19 starr befestigt und an ihren unteren Enden starr an einem Stützblock 23 montiert, der seinerseits an einem in den Figuren nur prinzipiell skizierten Abschnitt des Maschinengestells 24 der Linearreibschweißmaschine 1 abgestützt ist.

Ein Halteträger 11 der Staucheinheit 2 sitzt auf einer Basisplatte 25 (Fig. 1 und 4), die ihrerseits in geeigneter Weise am Maschinengestell 24 befestigt ist. Dabei ist der Halteträger 11 auf der Basisplatte 25 linear in Richtung auf die Oszillatoreinheit 3 hin bzw. von dieser weg verschieblich angebracht, wie dies in Fig. 4 durch die Darstellung von Längsführungsleisten 26 angegeben ist, die in entsprechende Führungsaufnahmen eingreifen, die in einer jeweils anliegenden Halterung 18 verschieblich geführt sind und über diese Halterungen 18 auf der Basisplatte 25 gehalten werden.

Der Verfahrantrieb für die Staucheinheit 2 erfolgt über eine Betätigungsstange 27, die ihrerseits wiederum über einen (in den Figuren nicht gezeigten) Hydraulikzylinder in Richtung des Pfeiles ***c*** betätigt wird (vgl. Fig. 1 und 4). Diese Richtung ***c*** entspricht der linearen Verfahrrichtung der Staucheinheit 2 in Richtung auf die Oszillatoreinheit 3 hin bzw. von dieser weg.

Die Ausrichtung der Staucheinheit 2 und der Oszillatoreinheit 3, relativ zueinander, ist so gewählt, daß die in den Spannaufnahmen 4 und 5 aufgenommenen Werkstücke 10 mit ihren einander zugewandten Endflächen 12 und 13 achsfluchtend und querschnittskonform zueinander ausgerichtet sind, wobei die Verfahrrichtung ***c*** der Staucheinheit 2 parallel zur Richtung der Mittelachsen der Werkstücke 10 weist. Die untere Detaildarstellung der Fig. 1 zeigt zwei Werkstücke 10 in Form zweier zu verschweißender Hälften eines Kettengliedes in deren relativer Zuordnung zueinander, wenn sie in den Spannaufnahmen 4 und 5 gehaltert sind, vor dem Schweißvorgang.

Die untere Halterung 19 des Aufnahmeteiles 8 der Oszillatoreinheit 3 ist auf ihrer der Staucheinheit 2 gegenüberliegenden Seite über zwei zueinander parallele rundstabförmige Stützen 28 in Verfahrrichtung ***c*** der Staucheinheit 2 an einem Abschnitt des Maschinengestells 24 starr befestigt, wobei die Befestigung der Stäbe 28 an der Halterung 19 ebenfalls starr ausgeführt ist.

Senkrecht quer zur Verfahrrichtung ***c*** der Staucheinheit 2 ist die Halterung 19 der Oszillatoreinheit 3 über eine horizontal liegende Antriebsstange 29 an eine (in den Figuren wiederum nicht dargestellte) Oszillatoreinrichtung in Form eines am Maschinengestell befestigten Hydropulsators unter Zwischenschaltung einer geeigneten Kupplung 30 angeschlossen, über den eine hin- und hergehende Oszillationsbewegung in Pfeilrichtung ***d*** (Fig. 2 und 3) auf die Halterung 19 übertragen werden kann.

Die Oszillationsrichtung ***d*** ist senkrecht zur Ausrichtung der Stützen 28 sowie zur Richtung ***c*** der linearen Verstellbewegung der Staucheinheit 2 ausgerichtet. Dabei wird bevorzugt ein Hydropulsator eingesetzt, dessen Amplitude und Frequenz einstellbar sind und der bevorzugt mit einer einstellbaren maximalen Amplitude von 2,5 mm sowie mit einer einstellbaren maximalen Frequenz von 100 Hz arbeitet. Bei einer Versuchsmaschine betrug dabei die Auslenkkraft des Hydropulsators bei einer Auslenkung der Halterung 19 von 1,5 mm 7,7 KN und bei einer Auslenkung von 2,5 mm 13,8 KN.

Die vertikalen Stützen 20 und 21 sowie die horizontalen Stützen 28 an der Oszillatoreinheit 3 sind so ausgeführt, daß sie bei Antrieb der Halterung 19 durch den Hydropulsator über die Antriebstange 29 in Oszillationsrichtung ***d*,** also senkrecht zur Verfahrrichtung ***c*** der Staucheinheit 2, elastisch federnd verbiegbar sind, wobei ihre starren Befestigungen an dem Stützblock 23 bzw. dem Maschinengestell 24 ungeändert verbleiben.

Die obere Halterung 22, an der die oberen Enden der drei oberen vertikalen Stützen 20 befestigt sind und die ihrerseits an die obere Betätigungsstange 16 angeschlossen ist, kann durch Verfahren der letzteren nach oben angehoben werden, um die Halterung 15, die das obere Abdeckteil 9 der Oszillatoreinheit 3 trägt, zusammen mit diesem nach oben anzuheben und dadurch einen Zugang zu dem im unteren Aufnahmeteil 8 der Spannaufnahme 5 sitzenden Werkstück 10 zu gestatten. Während dieser Anhebebewegung der oberen Halterung 22 wird diese über zwei an ihrer Oberseite angebrachte parallele Führungsstangen 32 geführt, deren jede durch eine in einer stationären Führungsplatte 31 ihr zugeordnete Führungsöffnung hindurchragt, in der sie bei einer Anhebe- oder Absenkbewegung der Halterung 22 verschieblich geführt ist. Zu diesem Zweck ist in Fig. 3 die Führungsplatte 31 örtlich geschnitten dargestellt, um ihre Zuordnung zu der Betätigungsstange 16 sowie den Führungsstangen 32 zu illustrieren.

Die vertikalen oberen Stützen 20 und unteren Stützen 21 sind in der Oszillatoreinheit 3 so angebracht, daß jede obere vertikale Stütze 20 mit einer unteren vertikalen Stütze 21 fluchtet. Dabei sind sie in der Form einer Längsleiste ausgebildet, mit zwei einander gegenüberliegenden großen Seitenflächen einer Breite ***A*** und einer Länge ***L*** (Fig. 1), die über Schmalseiten mit einer Breite ***B*** (Fig. 2) miteinander verbunden sind. Durch die Ausbildung der Breite ***B*** der Schmalseiten derart, daß die Breite ***A*** der großen Seitenflächen sehr viel größer als ***B*** ist, vorzugsweise mindestens das Acht- bis Zwölffache derselben, beträgt, ist sichergestellt, daß bei Ausbildung der vertikalen Stützen 20, 21 aus einem geeigneten elastisch verbiegbaren Material, wie etwa Stahl, der Biegewiderstand dieser leistenförmigen Stützen 20, 21 in Oszillationsrichtung ***d*** relativ gering ist und sich diese Stützen dabei in dieser Biegerichtung weich verhalten, während bei einer Kraftbeaufschlagung in Verfahrrichtung ***c*** der Staucheinheit, wie sie beim Andrücken der beiden Werkstücke 10 gegeneinander an deren einander zugewandten Endflächen 12 und 13 auftritt und auf die Oszillatoreinheit 3 wirkt, ein Verbiegen bzw. Knicken der vertikalen Stützen 20, 21 in dieser Richtung senkrecht zur Oszillationsrichtung ***d*** auf einen sehr großen Widerstand trifft, wobei unter Einwirkung der auftretenden und abzustützenden Kräfte eine Verbiegung der vertikalen Stützen 20, 21 in Richtung ***c*** nicht auftritt.

Hinzu kommt, daß auch die horizontalen Stützen 28 in Form von Rundstäben mit einem Durchmesser von ***D*** (Fig. 4) und einer Stablänge von ***E*** (Fig. 1) eine sehr starke Abstützung in Verfahrrichtung ***c*** der Staucheinheit 2 bewirken, weil sie parallel zu dieser Richtung angeordnet sind und damit bei Auftreten von Kräften in Richtung ***c*** ihrer Längsachse belastet werden, während bei seitlichen Auslenkungen in Oszillationsrichtung ***d*** ein relativ weiches Biegeverhalten vorliegt.

Die vertikalen Träger 20 und 21 in Leistenform sowie die Träger 28 in Form der Rundstäbe können aus jedem für das angegebene Biegeverhalten geeigneten Material und jeder geeigneten Form bestehen, sind aber ganz bevorzugt aus einem geeigneten Stahl gefertigt, der dauerfeste mechanische Federeigenschaften aufweist und auch über eine lange Einsatzzeit zuverlässig und verschleißfrei im Sinne einer Biegefeder arbeitet.

Sollen nun zwei Werkstücke 10 mit der in den Figuren gezeigten Linearreibschweißmaschine 1 miteinander verschweißt werden, wird zunächst das in der Spannaufnahme 4 der Staucheinheit 2 eingespannte Werkstücke 10 über die Staucheinheit 2 linear gegen die zugewandte Endfläche 13 des in der Oszillatoreinheit 3 eingespannten Werkstücks 10 hin so weit verfahren, bis die Endflächen 12 und 13 der beiden eingespannten Werkstücke 10 (vgl. Fig. 1, untere Detaildarstellung) gegeneinander gedrückt werden. Dabei wird die Staucheinheit 2 so zur Oszillatoreinheit 3 hin verfahren, daß der Anpreßdruck des in der Staucheinheit 2 eingespannten Werkstücks 10 gegen das in der Oszillatoreinheit 3 eingespannte Werkstück 10 einen vorgegebenen Wert erreicht, der abhängig von der Stahlsorte der beiden zu verschweißenden Werkstücke 10 gewählt ist und oft in einem Bereich von 30 N/mm² bis 50 N/mm² gewählt wird. Sind die beiden Werkstücke 10 gegeneinander angedrückt, wird durch Aktivierung des Hydropulsators das Werkstück 10, welches in der Spannaufnahme 5 der Oszillatoreinrichtung 3 eingespannt ist, in eine entsprechende Oszillation (vgl. Pfeil ***d*** in Fig. 2 und 3) versetzt. Durch die dabei in der Reibfläche auftretende Relativbewegung zwischen beiden Werkstücken 10, von denen nur das in der Oszillatoreinheit 3 festgeklemmte Werkstück 10 die Oszillationsbewegung ausführt, erfolgt eine zunehmende Erwärmung des Materials in der Reibzone, wobei gleichzeitig die Staucheinheit 2 zur Aufrechterhaltung des Anpreßdruckes und zum Ausgleich der bei der Erwärmung auftretenden Erweichungsverhältnisse in Richtung zur Oszillationseinheit 3 verfahren und dabei innerhalb eines vorgegebenen Kraftfensters gesteuert bewegt wird.

Bei Erreichen einer vorgegebenen Wegmarke, die an der Basisplatte 25 oder einer Halterung 18 angebracht ist, wird die Bewegung der Staucheinheit 2 beendet und unter Aufrechterhaltung des Anpreßdrucks der beiden Werkstücke 10 gegeneinander auch die Oszillationseinrichtung in Form des Hydropulsators über drei bis vier Schwingungen hinweg ebenfalls abgestoppt. Danach bleibt die Staucheinheit 2 noch über einen kurzen vorgegebenen Zeitraum, z. B. 5 sec., stehen, wonach die oberen Abdeckteile 7 und 9 der Spannaufnahmen 4 und 5 an der Staucheinheit 2 und der Oszillatoreinheit 3 nach oben hochgefahren werden. Sodann wird die Staucheinheit 2 in Richtung von der Oszillatoreinheit 3 weggefahren und das verschweißte Endprodukt z. B. manuell oder auch durch eine geeignete Greifeinrichtung entnommen.

Die Lage der Wegmarke, an welcher die Staucheinheit 2 ihre Andruckbewegung gegen das in der Oszillatoreinheit 3 eingespannte Werkzeug 10 beendet, ist so gewählt, daß der bis dahin zwischen den beiden Werkstücken 10 stattgefundene Erwärmungsvorgang in der Reibfläche infolge der Oszillation zu einer ausreichend "teigigen" Ausbildung des Materials an der Stoßstelle geführt hat. Nach Abstellen der Oszillationsbewegung der Oszillatoreinheit 3 staucht die Staucheinheit 2 mit einer vorgegebenen Andruckkraft das in ihr gehalterte Werkstück 10 auf das andere Werkstück auf. Dabei wird das teigige Material im Zuge dieser Reibschweißung aus der Stoßstelle seitlich ausgepreßt, bis die Endquerschnitte beider Werkstücke 10 voll miteinander verschweißt sind.

Die gezeigte Linearreibschweißmaschine 1 ist mit einer in den Figuren nicht dargestellten zentralen Steuereinrichtung versehen, welche alle bei Einsatz der Maschine auszuführenden Vorgänge so steuert, daß die gewünschte Linearreibschweißung der Werkstücke 10 unter Beachtung der eingestellten Einzelvorgaben (Größe der Andruckkraft, Wegsteuerung der Staucheinheit, Aktivierung des Hydropulsators u. a.) erreicht wird.

## Patentansprüche

1. Linearreibschweißmaschine (1), die eine Staucheinheit (2) und eine Oszillatoreinheit (3) umfaßt, deren jede eine Spannaufnahme (4, 5) für ein Werkstück (10) aufweist und beide Spannaufnahmen (4, 5) so vorgesehen sind, daß dort eingespannte Werkstücke (10) mit ihren zu verschweißenden Flächen (12, 13) einander zugewandt und zueinander ausgerichtet gehaltert sind, wobei die Spannaufnahme (4) der Staucheinheit (2) relativ zu der (5) der Oszillatoreinheit (3) linear verfahrbar und die letztere senkrecht quer zur Verfahrrichtung (c) der Staucheinheit (2) in einer Oszillationsrichtung (d) oszillierend hin- und herbewegbar sowie an den einen Enden von vertikalen sowie horizontalen Stützen (20, 21, 28) starr befestigt ist, deren andere Enden starr an Stützkörpern (23, 22, 24) verankert sind, ***dadurch gekennzeichnet, daß*** die Stützen (20, 21, 28) so ausgelegt sind, daß sie in Oszillationsrichtung (d) elastisch federnd verbiegbar sind und, daß die Stützen (20, 21, 28) bei einer Belastung in Verfahrrichtung (c) der Spannaufnahme (4) der Staucheinheit (2) knickfest ausgebildet sind, wobei ihre wrw Knicksicherheit, entsprechend dem Verhältnis von Knickkraft zur einwirkenden Kraft, mindestens im Bereich von 5 bis 10 liegt.

2. Linearreibschweißmaschine nach Anspruch 1, **dadurch gekennzeichnet, daß** die vertikalen Stützen (20, 21) in Form von leistenförmigen Trägern ausgebildet sind.

3. Linearreibschweißmaschine nach Anspruch 1 oder 2, **dadurch gekennzeichnet, daß** die horizontalen Stützen (28) in Form von Stützstäben ausgebildet sind.

4. Linearreibschweißmaschine nach einem der Ansprüche 1 bis 3, **dadurch gekennzeichnet, daß** jeweils mindestens zwei zueinander parallele vertikale Stützen (20, 21) und mindestens zwei zueinander parallele horizontale Stützen (28) vorgesehen sind.

5. Linearreibschweißmaschine nach einem der Ansprüche 1 bis 4, **dadurch gekennzeichnet, daß** die Stützen (20, 21, 28) aus Stahl bestehen.

6. Linearreibschweißmaschine nach einem der Ansprüche 1 bis 5, **dadurch gekennzeichnet, daß** die Spannaufnahme (5) der Oszillatoreinheit (3) vertikal sowohl nach unten, wie auch nach oben hin durch vertikale Stützen (20, 21) abgestützt ist.

7. Linearreibschweißmaschine nach einem der Ansprüche 1 bis 6, **dadurch gekennzeichnet, daß** die Spannaufnahme (4) der Staucheinheit (2) an einem Halteträger (11) angebracht ist, der relativ zur Spannaufnahme (5) der Oszillatoreinheit (3) linear verfahrbar ist.

8. Linearreibschweißmaschine nach einem der Ansprüche 1 bis 7, **dadurch gekennzeichnet, daß** jede Spannaufnahme (4, 5) ein unteres Aufnahmeteil (6, 8) und ein oberes Abdeckteil (7, 9) umfaßt, zwischen denen ein aufgenommenes Werkstück (10) kraftschlüssig und/oder formschlüssig verklemmbar ist.

9. Linearreibschweißmaschine nach Anspruch 8, **dadurch gekennzeichnet, daß** zum Einlegen oder Entnehmen eines Werkstücks (10) das obere Abdeckteil (7, 9) jeder Spannaufnahme (4, 5) vertikal nach oben hin verfahrbar ist.

10. Linearreibschweißmaschine nach einem der Ansprüche 8 oder 9, **dadurch gekennzeichnet, daß** sowohl das untere Aufnahmeteil (8), wie auch das obere Abdeckteil (9) der Spannaufnahme (5) der Oszillatoreinheit (3) an vertikale Stützen (20, 21) und das untere Aufnahmeteil (8) auch noch an die horizontalen Stützen (28) angeschlossen ist.

11. Linearreibschweißmaschine nach einem der Ansprüche 1 bis 10, **dadurch gekennzeichnet, daß** das untere Aufnahmeteil (8) der Spannaufnahme (5) der Oszillatoreinheit (3) an einen hydraulischen Pulsator zum Einleiten der oszillierenden Translationsbewegung angeschlossen ist.

12. Linearreibschweißmaschine nach Anspruch 11, **dadurch gekennzeichnet, daß** der hydraulische Pulsator über eine in Oszillationsrichtung (d) ausgerichtete Verbindungsstange (29) mit dem unteren Aufnahmeteil (8) der Spannaufnahme (5) der Oszillatoreinheit (3) verbunden ist.

13. Linearreibschweißmaschine nach Anspruch 11 oder 12, **dadurch gekennzeichnet, daß** der hydraulische Pulsator bei Betrieb mit einer einstellbaren Amplitude von maximal 2,5 mm und einer einstellbaren Frequenz von maximal 100 Hz betreibbar ist.

14. Linearreibschweißmaschine nach einem der Ansprüche 9 bis 11, **dadurch gekennzeichnet, daß** das obere Abdeckteil (7, 9) jeder Spannaufnahme (4, 5) zu deren vertikalem Verfahren über eine Betätigungsstange (16, 17) an einen an einem Maschinengestell (24) der Linearreibschweißmaschine (1) angebrachten hydraulischen Betätigungszylinder angeschlossen ist.

15. Linearreibschweißmaschine nach Anspruch 14, **dadurch gekennzeichnet, daß** die vertikalen Stützen (20) des oberen Abdeckteiles (9) der Spannaufnahme (5) der Oszillatoreinheit (3) an einem gemeinsamen Stützkörper (22) starr verankert sind, der seinerseits an der Betätigungsstange (17) zum vertikalen Verfahren des oberen Abdeckteiles (9) der Spannaufnahme (5) befestigt ist.

16. Linearreibschweißmaschine nach Anspruch 15, **dadurch gekennzeichnet, daß** die Stützkörper der vertikalen und horizontalen Stützen (20, 21, 28) des unteren Aufnahmeteils (8) der Oszillatoreinheit (3) vom Maschinengestell (24) gebildet werden oder sich direkt an diesem abstützen.

17. Linearreibschweißmaschine nach einem der Ansprüche 1 bis 16, **dadurch gekennzeichnet, daß** die Staucheinheit (2) zu ihrem linearen Verfahren an einen hydraulischen Betätigungszylinder angeschlossen ist, über den ein in der Spannaufnahme (4) der Staucheinheit (2) gehaltertes Werkstück (10) unter einem einstellbaren Anpreßdruck gegen ein in der Spannaufnahme (5) der Oszillatoreinheit (3) gehaltertes Werkstück (10) andrückbar ist.

18. Linearreibschweißmaschine nach Anspruch 17, **dadurch gekennzeichnet, daß** der Anpreßdruck 10 N/mm² bis 250 N/mm², bevorzugt 30 N/mm² bis 50 N/mm² beträgt.

19. Linearreibschweißmaschine nach einem der Ansprüche 1 bis 18, **dadurch gekennzeichnet, daß** eine zentrale Steuereinrichtung zum Steuern aller Betätigungsabläufe während des Betriebs der Maschine vorgesehen ist.

## Claims

1. A linear friction welding machine (1), which comprises an upsetting unit (2) and an oscillator unit (3), each of which has a clamping holder (4, 5) for a workpiece (10) and both clamping holders (4, 5) are provided so that workpieces (10) clamped there are held with their surfaces (12, 13) to be welded facing each other and aligned with each other, wherein the clamping holder (4) of the upsetting unit (2) can move linearly relative to that (5) of the oscillator unit (3) and the latter can move back and forth in an oscillating manner in an oscillation direction (d) perpendicularly to the travel direction (c) of the upsetting unit (2) and is rigidly fastened at one end of vertical and horizontal supports (20, 21, 28), the other ends of which are rigidly anchored on support bodies (23, 22, 24), ***characterized in that*** the supports (20, 21, 28) are designed such that they are elastically resiliently bendable in the oscillating direction (d) and **in that** the supports (20, 21, 28) are designed to be resistant to buckling when loaded in the travel direction (c) of the clamping holder (4) of the upsetting unit (2), the buckling resistance, corresponding to the ratio of buckling force to acting force, being at least in the range from 5 to 10.

2. The linear friction welding machine as claimed in claim 1, **characterized in that** the vertical supports (20, 21) are designed in the form of rail-like beams.

3. The linear friction welding machine as claimed in either of claims 1 and 2, **characterized in that** the horizontal supports (28) are designed in the form of support bars.

4. The linear friction welding machine as claimed in one of claims 1 to 3, **characterized in that** provision is made in each case for at least two vertical supports (20, 21) which are parallel to each other and at least two horizontal supports (28) which are parallel to each other.

5. The linear friction welding machine as claimed in one of claims 1 to 4, **characterized in that** the supports (20, 21, 28) consist of steel.

6. The linear friction welding machine as claimed in one of claims 1 to 5, **characterized in that** the clamping holder (5) of the oscillator unit (3) is vertically supported both in the downward direction as well as in the upward direction by means of vertical supports (20, 21).

7. The linear friction welding machine as claimed in one of claims 1 to 6, **characterized in that** the clamping holder (4) of the upsetting unit (2) is attached to a support bracket (11) which can move linearly relative to the clamping holder (5) of the oscillator unit (3).

8. The linear friction welding machine as claimed in one of claims 1 to 7, **characterized in that** each clamping holder (4, 5) comprises a lower holder part (6, 8) and an upper cover part (7, 9), between which an accommodated workpiece (10) can be clamped in a non-positively and/or positively locking manner.

9. The linear friction welding machine as claimed in claim 8, **characterized in that** for inserting or removing a workpiece (10) the upper cover part (7, 9) of each clamping holder (4, 5) can travel vertically in the upward direction.

10. The linear friction welding machine as claimed in either of claims 8 and 9, **characterized in that** both the lower holder part (8) as well as the upper cover part (9) of the clamping holder (5) of the oscillator unit (3) are connected to vertical supports (20, 21) and the lower holder part (8) is also connected to the horizontal supports (28).

11. The linear friction welding machine as claimed in one of claims 1 to 10, **characterized in that** both the lower holder part (8) of the clamping holder (5) of the oscillator unit (3) is connected to a hydraulic pulsator for initiating the oscillating translational movement.

12. The linear friction welding machine as claimed in claim 11, **characterized in that** the hydraulic pulsator is connected to the lower holder part (8) of the clamping holder (5) of the oscillator unit (3) via a connecting rod (29) which is oriented in the oscillating direction (d).

13. The linear friction welding machine as claimed in either of claims 11 and 12, **characterized in that** the hydraulic pulsator during operation can operate with an adjustable amplitude or 2.5 mm maximum and an adjustable frequency of 100 Hz maximum.

14. The linear friction welding machine as claimed in one of claims 9 to 11, **characterized in that** the upper cover part (7, 9) of each clamping holder (4, 5), for its vertical travel, is connected via an operating rod (16, 17) to a hydraulic operating cylinder which is attached to a machine frame (24) of the linear friction welding machine (1).

15. The linear friction welding machine as claimed in claim 14, **characterized in that** the vertical supports (20) of the upper cover part (9) of the clamping holder (5) of the oscillator unit (3) are rigidly anchored on a common support body (22) which in its turn is fastened on the operating rod (17) for the vertical travel of the upper cover part (9) of the clamping holder (5).

16. The linear friction welding machine as claimed in claim 15, **characterized in that** the support bodies of the vertical and horizontal supports (20, 21, 28) of the lower holder part (8) of the oscillator unit (3) are formed by the machine frame (24) or are supported directly on this.

17. The linear friction welding machine as claimed in one of claims 1 to 16, **characterized in that** the upsetting unit (2), for its linear travel, is connected to a hydraulic operating cylinder via which a workpiece (10) held in the clamping holder (4) of the upsetting unit (2) can be pressed, under an adjustable pressing on force, against a workpiece (10) held in the clamping holder (5) of the oscillator unit (3).

18. The linear friction welding machine as claimed in claim 17, **characterized in that** the pressing on pressure is between 10 N/mm² and 250 N/mm², preferably between 30 N/mm² and 50 N/mm².

19. The linear friction welding machine as claimed in one of claims 1 to 18, **characterized in that** a central control device is provided for controlling all the operating sequences during the operation of the machine.

## Revendications

1. Machine de soudage par friction linéaire (1), qui comprend une unité de compression (2) et une unité oscillateur (3), chacune d'entre elles présentant un logement de serrage (4, 5) pour une pièce (10) et les deux logements de serrage (4, 5) étant prévus de telle sorte que des pièces (10) qui y sont serrées soient maintenues de telle sorte que leurs surfaces (12, 13) à souder soient tournées l'une vers l'autre et alignées l'une par rapport à l'autre, le logement de serrage (4) de l'unité de compression (2) étant déplaçable linéairement par rapport à celui (5) de l'unité oscillateur (3) et cette dernière pouvant être animée d'un mouvement de va-et-vient de manière à osciller dans une direction d'oscillation (d) perpendiculairement transversalement à la direction de déplacement (c) de l'unité de compression (2) et étant fixée rigidement à des extrémités de supports (20, 21, 28) verticaux et horizontaux, supports dont les autres extrémités sont ancrées rigidement sur des corps de support (23, 22, 24), ***caractérisée en ce que*** les supports (20, 21, 28) sont conçus de telle sorte qu'ils peuvent être fléchis de manière élastique dans la direction d'oscillation (d), et **en ce que** les supports (20, 21, 28) sont réalisés de manière à résister au flambage lors d'une sollicitation dans la direction de déplacement (c) du logement de serrage (4) de l'unité de compression (2), leur sécurité contre le flambage, conformément au rapport de la force de flambage à la force agissant, étant située au moins dans la plage de 5 à 10.

2. Machine de soudage par friction linéaire selon la revendication 1, **caractérisée en ce que** les supports verticaux (20, 21) sont réalisés sous la forme de poutres en forme de barres.

3. Machine de soudage par friction linéaire selon la revendication 1 ou 2, **caractérisée en ce que** les supports horizontaux (28) sont réalisés sous la forme de tiges de support.

4. Machine de soudage par friction linéaire selon l'une des revendications 1 à 3, **caractérisée en ce que** respectivement au moins deux supports verticaux (20, 21) parallèles les uns aux autres et au moins deux supports horizontaux (28) parallèles les uns aux autres sont prévus.

5. Machine de soudage par friction linéaire selon l'une des revendications 1 à 4, **caractérisée en ce que** les supports (20, 21, 28) sont constitués d'acier.

6. Machine de soudage par friction linéaire selon l'une des revendications 1 à 5, **caractérisée en ce que** le logement de serrage (5) de l'unité oscillateur (3) est supporté verticalement tant vers le bas que vers le haut par des supports verticaux (20, 21).

7. Machine de soudage par friction linéaire selon l'une des revendications 1 à 6, **caractérisée en ce que** le logement de serrage (4) de l'unité de compression (2) est monté sur un support de retenue (11) qui est déplaçable linéairement par rapport au logement de serrage (5) de l'unité oscillateur (3).

8. Machine de soudage par friction linéaire selon l'une des revendications 1 à 7, **caractérisée en ce que** chaque logement de serrage (4, 5) comprend une partie de réception inférieure (6, 8) et une partie de recouvrement supérieure (7, 9) entre lesquelles une pièce logée (10) peut être serrée à force et/ou par complémentarité de formes.

9. Machine de soudage par friction linéaire selon la revendication 8, **caractérisée en ce que**, pour l'insertion ou le retrait d'une pièce (10), la partie de recouvrement supérieure (7, 9) de chaque logement de serrage (4, 5) est déplaçable verticalement vers le haut.

10. Machine de soudage par friction linéaire selon l'une des revendications 8 ou 9, **caractérisée en ce que** tant la partie de logement inférieure (8) que la partie de recouvrement supérieure (9) du logement de serrage (5) de l'unité oscillateur (3) sont raccordées à des supports verticaux (20, 21) et la partie de logement inférieure (8) est également raccordée aux supports horizontaux (28).

11. Machine de soudage par friction linéaire selon l'une des revendications 1 à 10, **caractérisée en ce que** la partie de logement inférieure (8) du logement de serrage (5) de l'unité oscillateur (3) est raccordée à un pulsateur hydraulique servant au déclenchement du mouvement de translation oscillant.

12. Machine de soudage par friction linéaire selon la revendication 11, **caractérisée en ce que** le pulsateur hydraulique est relié à la partie de logement inférieure (8) du logement de serrage (5) de l'unité oscillateur (3) par le biais d'une tige de liaison (29) orientée dans la direction d'oscillation (d).

13. Machine de soudage par friction linéaire selon la revendication 11 ou 12, **caractérisée en ce que** le pulsateur hydraulique peut fonctionner avec une amplitude réglable d'au maximum 2,5 mm et une fréquence réglable d'au maximum 100 Hz lors du fonctionnement.

14. Machine de soudage par friction linéaire selon l'une des revendications 9 à 11, **caractérisée en ce que** la partie de recouvrement supérieure (7, 9) de chaque logement de serrage (4, 5), pour son déplacement vertical, est raccordée, par le biais d'une tige d'actionnement (16, 17), à un cylindre d'actionnement hydraulique fixé à un bâti de machine (24) de la machine de soudage par friction linéaire (1).

15. Machine de soudage par friction linéaire selon la revendication 14, **caractérisée en ce que** les supports verticaux (20) de la partie de recouvrement supérieure (9) du logement de serrage (5) de l'unité oscillateur (3) sont ancrés rigidement sur un corps de support commun (22), qui est pour sa part fixé à la tige d'actionnement (17) servant au déplacement vertical de la partie de recouvrement supérieure (9) du logement de serrage (5).

16. Machine de soudage par friction linéaire selon la revendication 15, **caractérisée en ce que** les corps de support des supports verticaux et horizontaux (20, 21, 28) de la partie de logement inférieure (8) de l'unité oscillateur (3) sont formés par le bâti de machine (24) ou sont supportés directement sur celui-ci.

17. Machine de soudage par friction linéaire selon l'une des revendications 1 à 16, **caractérisée en ce que** l'unité de compression (2), pour son déplacement linéaire, est raccordée à un cylindre d'actionnement hydraulique par le biais duquel une pièce (10) maintenue dans le logement de serrage (4) de l'unité de compression (2) peut être pressée, sous une pression d'appui réglable, contre une pièce (10) maintenue dans le logement de serrage (5) de l'unité oscillateur (3).

18. Machine de soudage par friction linéaire selon la revendication 17, **caractérisée en ce que** la pression d'appui vaut de 10 N/mm² à 250 N/mm², de préférence de 30 N/mm² à 50 N/mm².

19. Machine de soudage par friction linéaire selon l'une des revendications 1 à 18, **caractérisée en ce qu'**un dispositif de commande central est prévu pour la commande de toutes les séquences d'actionnement pendant le fonctionnement de la machine.
